# EUROPEAN PATENT APPLICATION

(11) **EP 2 602 515 A1**
(43) Date of publication of application: **12.06.2013**
(21) Application number: 12195607.2
(22) Date of filing: 05.12.2012
(51) Int. Cl.: F16H 57/04

(54) **Power transmission device**

(30) Priority: 08.12.2011 JP 2011268487
(71) Applicant: AISIN SEIKI KABUSHIKI KAISHA, Kariya-shi, Aichi 448-8650 (JP)
(72) Inventor: Nakamura, Shinobu, Kariya-shi, Aichi 448-8650 (JP); Nonaka, Noriaki, Kariya-shi, Aichi 448-8650 (JP); Kimura, Tsuyoshi, Kariya-shi, Aichi 448-8650 (JP); Mikami, Jun, Kariya-shi, Aichi 448-8650 (JP)
(74) Representative: TBK

(57) **Abstract**

Problem: Lubrication oil agitated by a final gear (e.g. ring gear of a differential) of a power transmission device includes bubbles which might result in cavitation failure of an oil pump.

Solution: The oil reservoir is divided in a first (50) and a second (52) oil reservoir. The first oil reservoir (50) accomodates the final gear (24), the oil agitation of which causing bubbles. The second oil reservoir (52) does not accomodate the final gear and thus has no bubbles. The oil pump draws oil from the second oil reservoir (52) without bubbles. Thus, pump cavitation failure is prevented.

Application: Electric drive of a vehicle axle having an electric motor, a reduction gear and a differential.

## Description

### TECHNICAL FIELD

This disclosure generally relates to a power transmission device.

### BACKGROUND DISCUSSION

Delivery of a lubrication oil is necessary to facilitate lubrication between assembling parts included in a power transmission device transmitting driving force for driving a vehicle and also to cool heated parts heated, for example, by Joule heat of an electric motor and by frictional heat generated while the driving force is transmitted.

As a known power transmission device, for example, an upstanding type power transmission device which includes an input shaft directly connected to a rotor shaft of an electric motor serving as a driving source, an output shaft connected to an axle of a vehicle, and a counter shaft (a reduction mechanism) located between the input shaft and the output shaft in a gear housing is disclosed in JP2001-190042A (hereinafter referred to as Patent reference 1). The input shaft is arranged at higher position than the output shaft. The counter shaft serves as a sub shaft. These three shafts are provided with gears on each outer periphery of the shaft for transmitting driving force of the electric motor to the axle.

In the power transmission device disclosed in the Patent reference 1, a final gear (a differential transmission gear) installed in a gear case of the output shaft scoops up a lubrication oil reserved in the gear housing accommodating the output shaft. The scooped lubrication oil is transmitted to a meshing portion between the final gear and a second reduction gear through a first oil guide, and the lubrication oil splashed from the final gear and the second reduction gear is collected by a second oil guide arranged so as to surround side of a parking gear (which is provided at the counter shaft). The lubrication oil received in the second oil guide is scooped by the parking gear and collected by a third oil guide. The lubrication oil received in the third oil guide is supplied from a fourth oil guide to an oil delivery passage through an oil supply opening. The oil delivery passage is formed in a hollow portion of the input shaft, and the fourth oil guide is formed as gutter-shape.

The lubrication oil supplied through the oil delivery passage formed in the input shaft is divided to the lubrication oil supplied to an oil passage formed in a hollow portion of a rotor shaft of the electric motor and the lubrication oil supplied to a bearing of the input shaft. The lubrication oil supplied to the bearing provided at first end of the input shaft is supplied to a bearing provided at first end of the counter shaft through the oil supply opening. The lubrication oil supplied to the bearing provided at first end of the counter shaft is supplied to a bearing provided at first end of the output shaft through the oil supply opening. Finally the lubrication oil is collected in the gear housing accommodating the output gear.

On the other hand, the lubrication oil supplied to the oil passage formed in the rotor shaft is supplied to a bearing provided at first end of the rotor shaft and a bearing provided at second end of the rotor shaft The lubrication oil supplied to the bearing provided at first end of the rotor shaft is supplied to a bearing provided at second end of the counter shaft through the oil supply opening. The lubrication oil supplied to the bearing provided at second end of the counter shaft is supplied to a bearing provided at second end of the output shaft through the oil supply opening.

The lubrication oil supplied to the bearing provided at second end of the rotor shaft is supplied through an oil passage formed in end wall portion of a motor housing and supplied to the bearing provided at second end of the output shaft through the oil supply opening.

For the scooping-type lubrication oil supply by the final gear and the parking gear as disclosed in the Patent reference 1, when a high-power motor is used, inter-shaft distance between the output shaft accommodated in the gear housing reserving the lubrication oil and the rotor shaft of the electric motor (or the input shaft) may become long. Consequently, short of supply of the lubrication oil may occur, and each slide member may become seizing or break. Accordingly, when the electric motor (or a stator) is cooled by oil, the scooping-type lubrication oil supply may be insufficient for supplying the lubricant oil to cool the electric motor (or a stator). Possibility of performance failure such as deterioration of driving force of the electric motor exists as a result of heat increase of the electric motor by insufficient cooling.

Therefore, in substitution for the scooping type lubrication oil supplying system with gears, use of an oil pump has been proposed for lubricating a reduction mechanism and sliding members around an electric motor and cooling a stator of an electric motor. In this system, the lubrication oil is used in combination with the cooling water.

However, when the lubrication oil is reserved in a lower portion of the differential gear without providing a single purpose oil reservoir such as an oil pan at a position distant from the differential gear to achieve reduction of number of parts and reduction of size, the lubrication oil which is scooped up by rotation of the final gear accommodated in the gear case of the differential gear may be directory sucked to by the oil pump. In this case, the reserved lubrication oil may contain considerable amount of bubbles by scooping up by the final gear. When the oil pump draws the lubrication oil containing bubbles, cavitation failure may occur and pump head degradation of the oil pump and trouble in operation may be caused.

A need thus exists for a power transmission device that prevents occurrence of cavitation failure, cools and lubricates components of the power transmission device with sufficient effect even if an electric motor is operated in high power state, and is simple structure.

### SUMMARY

According to an aspect of this disclosure, a power transmission device, includes an input shaft rotatably provided and connected to a rotor shaft of an electric motor provided in a housing, an output shaft provided at lower position relative to the input shaft, including a final gear formed on an outer periphery of the output shaft and soaked in an oil reservoir formed at a bottom of the housing, and being connectable to a drive wheel side, a reduction mechanism provided between the input shaft and the output shaft, and transmitting rotation of the input shaft to the output shaft with decreasing rotation speed, a partition wall dividing the oil reservoir into a first oil reservoir in which the final gear is accommodated and a second oil reservoir in which the final gear is not accommodated, an oil passage passing a lubrication oil to at least a bearing of the rotor shaft, a bearing of the input shaft and the reduction mechanism, an oil pump including an outlet port and an inlet port, connected to the oil passage via the outlet port, and communicated with the second oil reservoir via the inlet port, a third oil reservoir provided at a position lower than the rotor shaft and receiving the lubrication oil at a position upper than the second oil reservoir, and a gutter-shaped member tilted so as to communicate with the third oil reservoir at an upper end and the second oil reservoir at an lower end, and crossing through or over the partition wall.

According to the aforementioned configuration, the lubrication oil accommodated in the housing is separated to the first oil reservoir and the second oil reservoir by the partition wall. Although the lubrication oil received in the first oil reservoir contains bubbles by mixing air since the rotating final gear scoops up the lubrication oil, the lubrication oil received in the second oil reservoir is kept to prevent inclusion of bubbles caused by scooping by the final gear since the partition wall blocks bubbles included in the lubrication oil from the first oil reservoir. Therefore, the lubrication oil which does not contain bubbles is drawn from the second oil reservoir to the inlet port of the oil pump. In addition, the lubrication oil used to lubricate the bearing of the rotor shaft is received in the third oil reservoir. The lubrication oil received in the third oil reservoir is used to cool the electric motor. The third oil reservoir is communicated with the upper end of the gutter-shaped member, and the gutter-shaped member is tilted and communicated with the second oil reservoir via the lower end which is positioned at lower level than the third oil reservoir.

When the oil pump draws a lubrication oil including bubbles according to known device, cavitation failure may occur (for example, operation trouble of the oil pump or lowering of supply amount of the lubrication oil may occur). When the lubrication oil is insufficiently supplied, seizing of the rotor shaft may be caused.

According to the embodiment, because the oil pump draws the lubrication oil without bubbles and supplies the lubrication oil to the oil supply passage and so on, the cavitation failure may be prevented. In addition, because the oil pump is used to supply the lubrication oil to the bearings of the rotor shaft, the bearing of the input shaft and the reduction mechanism, it is possible to supply adequate amount of the lubrication oil for lubricating and cooling of the sliding member in response to use of a high-power electric motor. In addition, the lubrication oil flows to the second oil reservoir through the gutter-shaped member by act of the gravity. Without using a special driving device for causing forced flow to return used lubrication oil (a return oil), a circulation system wherein the lubrication oil is reusabily returned in the housing may be configured with a simple structure.

According to another aspect of the disclosure, the power transmission device further includes an oil dividing passage provided between the upper end and the lower end of the gutter-shaped member wherein a portion of the lubrication oil returned to the housing is transported to the first oil reservoir.

According to the aforementioned configuration, a portion of the lubrication oil returned in the housing flows into the first oil reservoir by the oil dividing passage provided at the middle portion of the gutter-shaped member. Therefore, in addition to the oil pump, the lubrication oil may be supplied to the output shaft, the input shaft and the reduction mechanism by scooping up operation by the final gear accommodated in the first oil reservoir soaked to the lubrication oil.

According to another aspect of the disclosure, the oil passage includes a hollow portion provided in the rotor shaft and formed in a longitude direction of the rotor shaft, and a plurality of oil supply openings communicated with the hollow portion and opening at a corresponding position to the bearing on the outer periphery of the rotor shaft.

According to the aforementioned configuration, the rotor shaft has the hollow portion along the shaft center (in a longitude direction) of the rotor shaft, and the oil supply opening is provided at a position on the outer periphery of the rotor shaft that corresponds to position of the rotor bearings. Therefore, it is not necessary to provide an extra oil supply passage for supplying the lubrication oil to the bearing. Since the lubrication oil supplied to the oil passage by the oil pump is supplied to the bearing through the oil supply opening by act of centrifugal force caused by rotation of the rotor shaft, the lubrication oil may be appropriately supplied in response to a driving state of the electric motor.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view illustrating a power transmission device according to an embodiment disclosed here;

Fig. 2 is a perspective view schematically explaining positional relationship between an input shaft, an output shaft, a reduction mechanism and a gutter shaped member in which left side of the parts shown in Fig.1 is removed; and

Fig. 3 is a front view of the power transmission device shown in Fig. 2.

### DETAILED DESCRIPTION

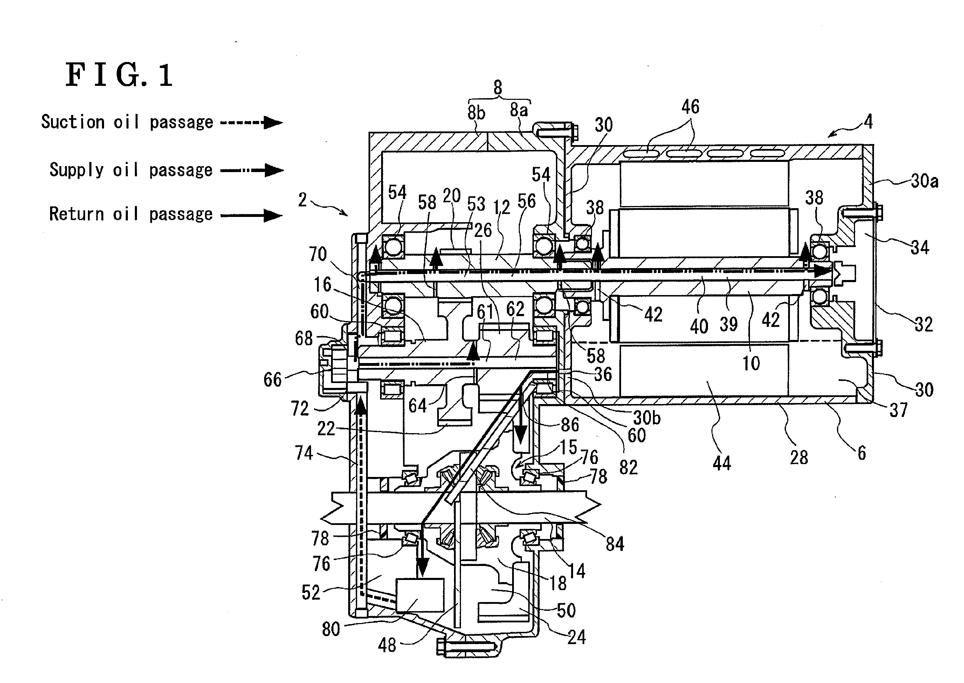

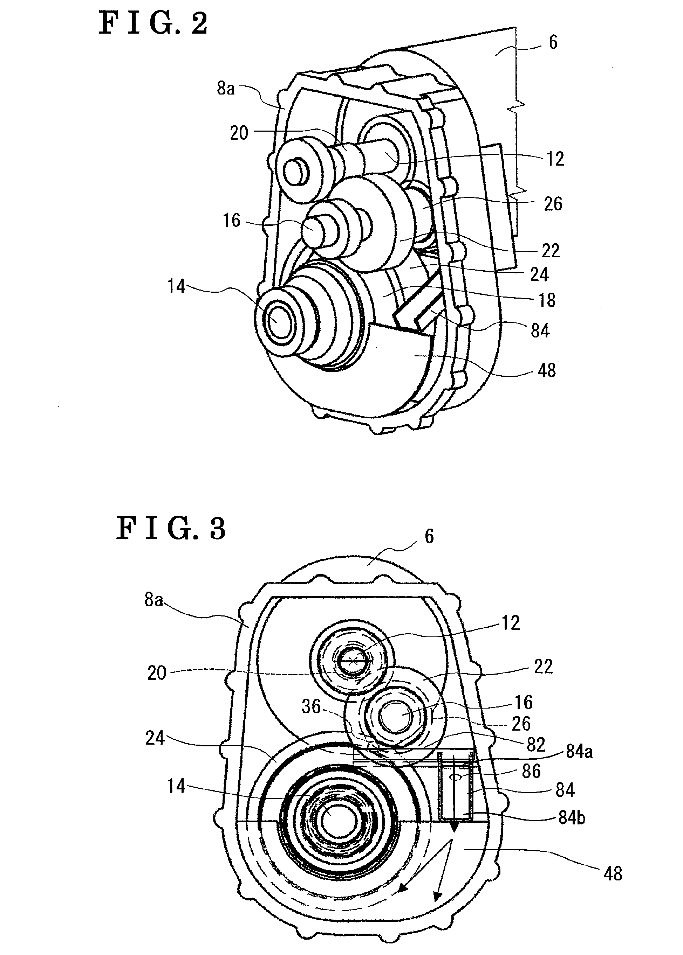

An embodiment of a power transmission device 2 will be explained with reference to Figs. 1 to 3. Fig. 1 shows an electric motor 4 and the power transmission device 2 which transmits driving force generated by the electric motor 4 to left and right wheels of a vehicle.

The power transmission device 2 mainly includes an input shaft 12 connected to a rotor shaft 10 of the electric motor (a vehicle driving motor) 4 at left end shown in Fig. 1, an output shaft 14 arranged in parallel to the input shaft 12, and a counter shaft (a reduction mechanism) 16 which acts as a link between the input shaft 12 and the output shaft 14 in a gear housing (a housing) 8 attached to one end (in Fig. 1, corresponding to the left end) of a motor housing (a housing) 6 of the electric motor 4. The motor housing 6 and the gear housing 8 serve as a housing.

A differential gear 15 is formed on a periphery of the output shaft 14. The differential gear 15 is accommodated in a gear case 18 which is pivotally supported at a lower portion of the gear housing 8 and includes a pair of side gears placed at left and right in Fig. 1 and plural pinion gears meshed with side gears.

The counter shaft 16 is pivotally supported by bearings provided at both ends in the gear housing 8. The counter shaft 16 includes a first reduction gear 22 meshed with an input gear 20 provided at the input shaft 12 and a second reduction gear 26 meshed with a final gear 24 provided at the gear case 18 of the differential gear 15. For the reduction mechanism, diameter of the first reduction gear 22 is larger than diameter of the second reduction gear 26. The reduction mechanism is configured to decrease rotation speed while rotation of the input shaft 12 is transmitted to the output shaft 14.

The motor housing 6 including a peripheral wall 28 surrounding the rotor shaft 10 and a stator 44 of the electric motor 4 and end walls 30 (a first end wall 30a and a second end wall 30b) provided at opposite ends (right end and left end as shown in Fig. 1) of the peripheral wall 28. The first end wall 30a serves as a cap for assembling the rotor shaft 10. At a center of the cap-shaped first end wall 30a, a maintenance opening 34 is formed and closed by, for example a disc plate 32 with a fastening bolt. The second end wall (a dividing wall) 30b includes an outflow opening 36 at a predetermined height from the lower end of the second end wall 30b. The outflow opening 36 formed on the second end wall 30b is aligned to an outflow opening 36 formed on a side wall (a dividing wall) 8a of a gear housing 8. A third oil reservoir 37 which serves the lubrication oil is provided at a bottom portion of the motor housing 6. When a lubrication oil is accumulated in the third oil reservoir 37 over a predetermined amount, the lubrication oil flows through the outflow opening 36 into a gutter-shaped member 84 of the gear housing 8 adjoining to the motor housing 6.

The motor housing 6 has a pair of bearing attachment openings which are stepwisely inwardly projected in the motor housing 6 on the end walls 30a, 30b, respectively, for mounting a pair of rotor bearings (bearing) 38. The rotor shaft 10 is pivotally supported by the rotor bearing 38 at opposite ends. In the rotor shaft 10, a rotor shaft hollow portion (hollow portion) 39 is formed by forming through hole in a direction of the shaft center (longitude direction) of the rotor shaft 10. Plural rotor shaft oil supply openings (oil supply opening) 42 are provided on the outer periphery of the rotor shaft 10. The rotor shaft oil supply opening 42 is provided at a position that corresponds to position of each of the rotor bearings 38 (for example, the position shifted with a predetermined offset from a supported portion by the rotor bearing 38 on periphery of the rotor shaft 10 to middle position in axial direction of the rotor shaft 10) and communicated with the rotor shaft hollow portion 39 (inner rotor space for oil supply passage). The rotor shaft hollow portion 39 and the rotor shaft oil supply opening 42 correspond to be a rotor shaft oil supply passage 40 which serves as an oil passage for supplying the lubrication oil. When the rotor shaft 10 rotates about its axis, a portion of the lubrication oil supplied to the rotor shaft hollow portion 39 is discharged from the rotor shaft oil supply opening 42 to the rotor bearing 38 by effect of centrifugal force.

A stator 44 is provided on an inner wall of the peripheral wall 28. A water-cooling jacket 46 for circulating cooling fluid is formed inside the peripheral wall 28 at a position opposed to the stator 44.

The gear housing 8 is formed so as to divide in right side (a first half portion 8a) and left side (a second half portion 8b) shown in Fig. 1, and the first half portion 8a of the gear housing 8 is attached to the second end wall 30b of the motor housing 6 by, for example, tightening bolts. The first half portion 8a and the second half portion 8b are fastened to be a unit by, for example, bolts. A partition wall 48 is approximately vertically provided for dividing the oil reservoir 50, 52 into a first oil reservoir 50 and a second oil reservoir 52 at bottom portion of the gear housing 8. The partition wall 48 is made from, for example, a steel plate and arranged in a joint plane between the first half portion 8a and the second half portion 8b of the gear housing 8. The first oil reservoir 50 which is surrounded by the partition wall 48 and the first half portion 8a of the gear housing 8 accommodates the final gear 24 of the differential gear 15. When the first oil reservoir 50 is filled with the lubrication oil, a part of the final gear 24 is soaked (or dipped by rotation of the final gear 24) in the lubrication oil.

On the other hand, the second oil reservoir 52 which is surrounded by the partition wall 48 and the second half portion 8b of the gear housing 8 does not accommodate the final gear 24 since the second oil reservoir 52 is divided from the first oil reservoir 50 by the partition wall 48. When the first oil reservoir 50 and the second oil reservoir 52 are filled with the lubrication oil, the lubrication oil filled in the second oil reservoir 52 is not disturbed or scooped by a rotation of the final gear 24. Therefore, when the lubrication oil filled in the first oil reservoir 50 contains bubbles generated by scooping caused by rotation of the final gear 24, the partition wall 48 blocks transfer of bubbles from the first oil reservoir 50 to the second oil reservoir 52.

A pair of opposed bearing attachment openings are provided at upper portion of the side wall of the first half portion 8a and the second half portion 8b of the gear housing 8. These bearing attachment openings are coaxially provided with the bearing attachment openings provided in the motor housing 6 and axially support both ends of the input shaft 12 via bearings 54 (for example, ball bearings are used as the bearings 54). The input shaft 12 is engaged with the rotor shaft 10 of the electric motor 4 by spline joint at each end portion (namely, the motor housing 6 side of the input shaft 12 and the gear housing 8 side of the rotor shaft 10 are engaged). The input shaft 12 includes an input shaft hollow portion 53 formed by forming through hole along the shaft center (longitude direction) of the input shaft 12. A plural input shaft oil supply opening 58 is provided on periphery of the input shaft 12. The input shaft oil supply opening 58 is provided at a position that corresponds to position of the input gear 20 and a position that corresponds to position of each of the bearings 54 (for example, the position shifted with a predetermined offset from a supported portion by the bearing 54 on the outer periphery of the input shaft 12 to both ends in axial direction of the input shaft 12) and communicated with the input shaft hollow portion 53. When the input shaft 12 rotates about its axis, a portion of the lubrication oil supplied to the input shaft hollow portion 53 is discharged from the input shaft oil supply opening 58 to the input gear 20 and the bearings 54 by effect of centrifugal force. The input shaft hollow portion 53 and the input shaft oil supply opening 58 correspond to be an input shaft oil supply passage 56 which serves as oil passage for supplying the lubrication oil. The rest of the lubrication oil is supplied from the input shaft hollow portion 53 of the input shaft oil supply passage 56 to the rotor shaft oil supply passage 40.

A pair of opposed bearing attachment openings are provided at middle portion of the side wall of the first half portion 8a and the second half portion 8b of the gear housing 8. These bearing attachment openings axially support both ends of the counter shaft 16 via bearings 60 (for example, cylindrical roller bearings are used as the bearings 60). The counter shaft 16 includes a counter shaft hollow portion 61 formed by forming through hole along the shaft center (longitude direction) of the counter shaft 16. Plural counter shaft oil supply openings 64 are provided on periphery of the counter shaft 16. The counter shaft oil supply opening 64 is provided at a position that corresponds to position of the first reduction gear 22 and the second reduction gear 26 on the outer periphery of the counter shaft 16 (for example, an intermediate position between the first reduction gear 22 and the second reduction gear 26 in axial direction of the counter shaft 16) and communicated with the counter shaft hollow portion 61. The counter shaft hollow portion 61 and the counter shaft oil supply opening 64 correspond to be a counter shaft oil supply passage 62 which serves as oil passage for supplying the lubrication oil. When the counter shaft 16 rotates about its axis, a portion of the lubrication oil supplied to the counter shaft hollow portion 61 is discharged from the counter shaft oil supply opening 64 to the bearings 60 by effect of centrifugal force.

An oil pump 66 is provided at outside of the bearing attachment opening which corresponds to one of the bearing 60 placed more distant from the electric motor 4. For example, an internal gear pump is used as the oil pump 66, and a drive shaft for rotating a gear of the oil pump 66 is in conjunction with the counter shaft 16. An outlet port 68 of the oil pump 66 is connected to an oil passage 70. The oil passage 70 is provided by forming a tunnel in the side wall of the second half portion 8b of the gear housing 8 (or formed by penetrating through the side wall of the second half portion 8b of the gear housing 8). The oil passage 70 is connected to the input shaft oil supply passage 56 of the input shaft 12 and to the counter shaft oil supply passage 62 of the counter shaft 16. The oil passage 70, the input shaft oil supply passage 56, the counter shaft oil supply passage 62 and rotor shaft oil supply passage 40 correspond to be a supply oil passage or the oil passage. An inlet port 72 of the oil pump 66 is connected to a suction oil passage 74 communicated with an oil suction portion 80.

A pair of opposed bearing attachment openings are provided at lower portion of the side wall of the first half portion 8a and the second half portion 8b of the gear housing 8. These bearing attachment openings axially support opposite ends of the output shaft 14 of the differential gear 15 via bearings 76 (for example, tapered roller bearings are used as the bearings 76). A pair of oil seals 78 is provided at opposite sides of the output shaft 14 with a predetermined distance outward from the bearings 76.

An oil suction portion 80 including a strainer is included in the second oil reservoir 52 provided in the gear housing 8. The oil suction portion 80 is communicated with the inlet port 72 of the oil pump 66 through a suction oil passage 74 which is arranged along the second half portion 8b of the gear housing 8. The suction oil passage 74 is formed as, for example, a pipe made of metal, and is fixed to an inner surface of the end wall of the gear housing 8 using, for example, a bracket and a bolt

The outflow opening 36 is opened at a middle portion in the side wall (the dividing wall) of the first half portion 8a of the gear housing 8, and is in communication with a return oil passage 82 provided at the side wall of the first half portion 8a with an oil transfer recess slightly inclined relative to horizontal. The return oil passage 82 is further communicated with the gutter-shaped member 84. The gutter-shaped member 84 is formed by, for example, folding opposite ends in narrow sides of a steel strip at a right angle. In other word, the gutter-shaped member 84 is tilted (or inclined) and communicated with the third oil reservoir 37 via the upper end 84a and with the second oil reservoir 52 via the lower end 84b. The gutter-shaped member 84 is crossing through or over the partition wall 48. An oil dividing passage 86 is provided at an upper-middle portion (between the upper end 84a and the lower end 84b) of the bottom of the gutter-shaped member 84 and is shaped as an opening through which a portion of the lubrication oil returned to the housing 8 is conducted to the first oil reservoir 50. The oil dividing passage 86 is provided at corresponding position to the first oil reservoir 50 (namely, the oil dividing passage 86 is provided above the first oil reservoir 50).

The lubrication mechanism for the power transmission device includes the partition wall 48, the oil suction portion 80, the suction oil passage 74, the rotor shaft oil supply passage 40, the oil pump 66, the outflow opening 36, the gutter-shaped member 84 and the oil dividing passage 86.

According to above mentioned power transmission device 2, when the electric motor 4 is activated, the rotor shaft 10 of the electric motor 4 rotates, and the input shaft 12 engaged with the rotor shaft 10 by spline connection rotates. The input gear 20 provided on outer periphery of the input shaft 12 is meshed with the first reduction gear 22 which is larger than the input shaft 12 in the diameter and provided at the counter shaft 16, and rotates the counter shaft 16 with reduced rotation speed relative to rotation speed of the input shaft 12. The second reduction gear 26 which is smaller than the first reduction gear 22 in the diameter is meshed with the final gear 24 which is larger than the second reduction gear 26 in the diameter and provided at the counter shaft 16, and rotates the gear case 18 with reduced rotation speed relative to rotation speed of the counter shaft 16. During the rotation of the gear case 18, a pinion gear revolves and side gears meshing with the pinion gear individually rotate. Therefore, the rotating torque (the driving force) generated by the electric motor 4 is transmitted to drive wheels.

When the counter shaft 16 is rotated in response to the activation of the electric motor 4, the drive shaft of the oil pump 66 correspondingly rotates, and the oil pump 66 sucks the lubrication oil (or a suction oil) reserved in the second oil reservoir 52 via an opening communicated with the suction oil passage 74. Since the suctioned lubrication oil is separated from the first oil reservoir 50 by the partition wall 48 to prevent inflow of the lubrication oil including bubbles. The suctioned bubble-free lubrication oil is transported to the inlet port 72 of the oil pump 66. The lubrication oil is pressurized by the oil pump 66 and supplied to the counter shaft oil supply passage 62 and the oil passage 70 through the outlet port 68. The lubrication oil supplied to the counter shaft oil supply passage 62 is discharged from the counter shaft oil supply opening 64 by effect of centrifugal force generated by rotation of the counter shaft 16. The lubrication oil discharged from the counter shaft oil supply opening 64 is supplied to the meshing portion between the first reduction gear 22 and the input gear 20 and the meshing portion between the second reduction gear 26 and the final gear 24.

The surplus lubrication oil supplied to the meshing portion between the first reduction gear 22 and the input gear 20 and the meshing portion between the second reduction gear 26 and the final gear 24 and the lubrication oil splashed into the air from the counter shaft oil supply opening 64 fall into lower part of the gear housing 8 by effect of the gravity, and accumulated in the first oil reservoir 50 and the second oil reservoir 52.

The lubrication oil supplied to the oil passage 70 is supplied to the input shaft oil supply passage 56, and is discharged from the input shaft oil supply opening 58 by effect of centrifugal force generated by rotation of the input shaft 12. The lubrication oil discharged from the input shaft oil supply opening 58 is supplied to the bearings 54 of the input shaft 12 and the meshing portion between the input gear 20 and the first reduction gear 22.

The surplus lubrication oil supplied to the bearings 54 of the input shaft 12 and the meshing portion between the input gear 20 and the first reduction gear 22 and the lubrication oil splashed into the air from the input shaft oil supply opening 58 fall into lower part of the gear housing 8 by effect of the gravity, and accumulated in the first oil reservoir 50 and the second oil reservoir 52.

The lubrication oil supplied to the input shaft oil supply passage 56 is supplied to the rotor shaft oil supply passage 40 communicated with the input shaft oil supply passage 56. The lubrication oil supplied to the rotor shaft oil supply passage 40 is discharged from the rotor shaft oil supply opening 42 by effect of centrifugal force generated by rotation of the rotor shaft 10. The lubrication oil discharged from the rotor shaft oil supply opening 42 is supplied to the rotor bearings 38 of the rotor shaft 10 and a stopper portion. This allows the rotor bearings 38 and the stopper portion to be lubricated.

The surplus lubrication oil supplied to the rotor bearings 38 and the stopper portion and the lubrication oil splashed into the air from the rotor shaft oil supply opening 42 falls into lower part of the motor housing 6 by effect of the gravity, and accumulated in the third oil reservoir 37. The lubrication oil accumulated in the third oil reservoir 37 cools the stator 44.

When the lubrication oil accumulated in the third oil reservoir 37 is accumulated exceeding a predetermined volume (namely, oil level of the lubrication oil reaches a height of the position of the outflow opening 36 provided on the end wall of the motor housing 6), the lubrication oil flows through the outflow opening 36 into the side of the gear housing 8. The lubrication oil flowing out from the outflow opening 36 (return oil) is received at the return oil passage 82 provided in the gear housing 8, and is further transferred to the second oil reservoir 52 through the gutter-shaped member 84. When the lubrication oil flows through the gutter-shaped member 84, a part of the lubrication oil is guided to the first oil reservoir 50 through the oil dividing passage 86.

On the other hand, the lubrication oil accumulated in the first oil reservoir 50 is scooped up by rotation of the final gear 24 and supplied to the meshed portion between the second reduction gear 26 and the final gear 24, the bearing 60 (provided in the first half portion 8a of the housing 8) of the counter shaft 16, and so on. This lubrication oil supplying operation is conducted as a separate operation from the lubrication oil supply by the oil pump 66 described above. The surplus lubrication oil is accumulated in the first oil reservoir 50 and the second oil reservoir 52 by effect of the gravity.

According to the above described power transmission device 2, the lubrication oil accommodated in the motor housing (or the housing) 6 and the gear housing (or the housing) 8 is separated to the first oil reservoir 50 and the second oil reservoir 52 by the partition wall 48. Although the lubrication oil received in the first oil reservoir 50 contains bubbles by mixing air since the rotating final gear 24 scoops up the lubrication oil, the lubrication oil received in the second oil reservoir 52 is kept to prevent inclusion of bubbles caused by scooping by the final gear 24 since the partition wall 48 blocks bubbles included in the lubrication oil from the first oil reservoir 50. Therefore, the lubrication oil which does not contain bubbles is drawn from the second oil reservoir 52 to the inlet port 72 of the oil pump 66.

When the oil pump draws a lubrication oil including bubbles according to known device, cavitation failure may occur (for example, operation trouble of the oil pump or lowering of supply amount of the lubrication oil may occur). When the lubrication oil is insufficiently supplied, seizing of the rotor shaft may be caused.

According to the embodiment, because the oil pump 66 draws the lubrication oil without bubbles and supplies the lubrication oil to the oil supply passage (or the oil passage) 40, 56, 70 and so on, the cavitation failure may be prevented. In addition, because the oil pump 66 is used to supply the lubrication oil to the bearings 38 of the rotor shaft 10, the bearings 54 of the input shaft 12 and the reduction mechanism 16, it is possible to supply adequate amount of the lubrication oil for lubricating and cooling of the sliding member in response to use of a high-power electric motor.

In addition, the lubrication oil used to lubricate the bearings 38 of the rotor shaft 10 is received in the third oil reservoir 37. The lubrication oil received in the third oil reservoir 37 is used to cool the stator 44 of the electric motor 4. The third oil reservoir 37 is communicated with the upper end 84a of the gutter-shaped member 84 through the return oil passage 82, and the gutter-shaped member 84 is tilted and communicated with the second oil reservoir 52 via the lower end 84b which is positioned at lower level than the third oil reservoir 37. Therefore, the lubrication oil flows to the second oil reservoir 52 through the gutter-shaped member 84 by act of the gravity. Without using a special driving device for causing forced flow to return used lubrication oil (a return oil), a circulation system wherein the lubrication oil is reusabily returned in the housing may be configured with a simple structure.

In addition, a portion of the lubrication oil returned in the gear housing (or the housing) 8 flows into the first oil reservoir 50 by the oil dividing passage 86 provided at the middle portion of the gutter-shaped member 84. Therefore, in addition to the oil pump 66, the lubrication oil may be supplied to the output shaft 14, the input shaft 12 and the reduction mechanism 16 by scooping up operation by the final gear 24 accommodated in the first oil reservoir 50 soaked to the lubrication oil.

In addition, the rotor shaft 10 has the rotor shaft hollow portion (or the hollow portion) 39 along the shaft center (in a longitude direction) of the rotor shaft 10, and the rotor shaft oil supply opening (oil supply opening) 42 is provided at a position on the outer periphery of the rotor shaft 10 that corresponds to position of each of the bearings 38 of the rotor shaft 10. Therefore, it is not necessary to provide an extra oil supply passage for supplying the lubrication oil to the bearings 38 of the rotor shaft 10. Since the lubrication oil supplied to the rotor shaft oil supply path (oil passage) 40 by the oil pump 66 is supplied to the bearings 38 through the rotor shaft oil supply opening 42 by act of centrifugal force caused by rotation of the rotor shaft 10, the lubrication oil may be appropriately supplied in response to a driving state of the electric motor 4.

According to the above described structure, the oil pump 66 is driven by interlocking between the drive shaft of the oil pump 66 and the counter shaft 16. However, it is not limited to such a structure, and, for example, interlocking mechanism between the drive shaft of the oil pump and the input shaft is applicable. Other driving source such as electricity is applicable.

In addition, it is not limited to use the gear pump. For example, known pumps such as a vane type pump and a piston type pump are selectively applicable. When the oil pump is driven by other driving source such as an electric pump, the suction oil passage described in the embodiment can be omitted. For example, by placing the oil pump in the second oil reservoir or around the second oil reservoir, the lubrication oil suctioned from the inlet port can be supplied to the oil passage through the outlet port.

In addition, it is not limited to use special instruments or parts such as oil pans for reserving lubrication oil for the first oil reservoir 50 and the second oil reservoir 52. For example, containers that is provided at a bottom n the gear housing and does not leak the lubrication oil to outside of the gear housing is applicable.

In addition, it is not limited to apply a single counter shaft 16 as the reduction mechanism including the first reduction gear 22 meshing with the input gear 20 of the input shaft 12 and the second reduction gear 26 meshing with the final gear 24 of the output shaft 14 on the outer periphery of the counter shaft 16. For example, a driven shaft which transmits rotation of the counter shaft to the output shaft can be additionally provided.

In addition, it is not limited to determine the height of the partition wall 48 to the position of the center of the output shaft 14. For example, the height of the partition wall can be determined to be an upper end of the final gear.

In addition, it is not limited to shape the gutter-shaped member 84 by folding opposite ends in narrow sides of a steel strip at a right angle. For example, a pipe member having a circular cross-section or a square cross-section is applicable.

The principles, preferred embodiments and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.
A power transmission device includes a partition wall (48) dividing an oil reservoir into a first oil reservoir (50) in which a final gear (24) is accommodated and a second oil reservoir (52) in which the final gear is not accommodated, an oil passage (40, 62, 70) passing a lubrication oil to a bearings (38, 54) of a rotor shaft (10) and to an input shaft (12) and a reduction mechanism (16), an oil pump (66) connected to the oil passage via an outlet port (68), and communicated with the second oil reservoir via an inlet port (72), a third oil reservoir (37) receiving the lubrication oil at a position upper than the second oil reservoir, and a gutter-shaped member (84) tilted so as to communicate with the third oil reservoir at an upper end (84a) and the second oil reservoir at an lower end (84b), and crossing through or over the partition wall.

## Claims

1. A power transmission device (2), comprising:
an input shaft (12) rotatably provided and connected to a rotor shaft (10) of an electric motor (4) provided in a housing (6,8);
an output shaft (14) provided at lower position relative to the input shaft (12), including a final gear (24) formed on an outer periphery of the output shaft (14) and soaked in an oil reservoir (50) formed at a bottom of the housing (8), and being connectable to a drive wheel side;
a reduction mechanism (16) provided between the input shaft (12) and the output shaft (14), and transmitting rotation of the input shaft (12) to the output shaft (14) with decreasing rotation speed;
a partition wall (48) dividing the oil reservoir (50) into a first oil reservoir (50) in which the final gear (24) is accommodated and a second oil reservoir (52) in which the final gear (24) is not accommodated;
an oil passage (40, 62, 70) passing a lubrication oil to at least a bearing (38) of the rotor shaft (10), a bearing (54) of the input shaft (12) and the reduction mechanism (16);
an oil pump (66) including an outlet port (68) and an inlet port (72), connected to the oil passage (62, 70) via the outlet port (68), and communicated with the second oil reservoir (52) via the inlet port (72);
a third oil reservoir (37) provided at a position lower than the rotor shaft (10) and receiving the lubrication oil at a position upper than the second oil reservoir (52); and
a gutter-shaped member (84) tilted so as to communicate with the third oil reservoir (37) at an upper end (84a) and the second oil reservoir (52) at an lower end (84b), and crossing through or over the partition wall (48).

2. The power transmission device (2) according to claim 1, further comprising:
an oil dividing passage (86) provided between the upper end (84a) and the lower end (84b) of the gutter-shaped member (84) wherein a portion of the lubrication oil returned to the housing (8) is transported to the first oil reservoir (50).

3. The power transmission device (2) according to either claim 1 or 2, wherein
the oil passage (40, 70) includes a hollow portion (39) provided in the rotor shaft (10) and formed in a longitude direction of the rotor shaft (10), and a plurality of oil supply openings (42) communicated with the hollow portion (39) and opening at a corresponding position to the bearing (38) on the outer periphery of the rotor shaft (10).

## Amended claims

### Amended claims in accordance with Rule 137(2) EPC.

**1.** A power transmission device (2), comprising:
an input shaft (12) rotatably provided and connected to a rotor shaft (10) of an electric motor (4) provided in a housing (6,8);
an output shaft (14) provided at a lower position relative to the input shaft (12), including a final gear (24) formed on an outer periphery of the output shaft (14) and soaked in an oil reservoir (50, 52) formed at a bottom of the housing (8), and being connectable to a drive wheel side;
a reduction mechanism (16) provided between the input shaft (12) and the output shaft (14), and transmitting rotation of the input shaft (12) to the output shaft (14) with decreasing rotation speed; and
an oil passage (40, 62, 70) passing a lubrication oil to at least a bearing (38) of the rotor shaft (10), a bearing (54) of the input shaft (12) and the reduction mechanism (16);
the power transmission device (2) being **characterized by** further comprising
a partition wall (48) dividing the oil reservoir (50, 52) into a first oil reservoir (50) in which the final gear (24) is accommodated and a second oil reservoir (52) in which the final gear (24) is not accommodated;
an oil pump (66) including an outlet port (68) and an inlet port (72), connected to the oil passage (62, 70) via the outlet port (68), and communicated with the second oil reservoir (52) via the inlet port (72);
a third oil reservoir (37) provided at a position lower than the rotor shaft (10) and receiving the lubrication oil at a position upper than the second oil reservoir (52); and
a gutter-shaped member (84) tilted so as to communicate with the third oil reservoir (37) at an upper end (84a) and the second oil reservoir (52) at an lower end (84b), and crossing through or over the partition wall (48).
